# EUROPÄISCHE PATENTSCHRIFT

(11) **EP 1 386 655 B1**
(45) Veröffentlichungstag und Bekanntmachung des Hinweises auf die Patenterteilung: **09.01.2008**
(21) Anmeldenummer: 03016026.1
(22) Anmeldetag: 15.07.2003
(51) Int. Cl.: B01D 53/64

(54) **Verfahren zur Abscheidung von Quecksilber aus Rauchgasen**
Process for removing mercury from flue gases
Procédé pour l'élimination de mercure de gaz de combustion

(30) Priorität: 22.07.2002 DE 10233173
(43) Veröffentlichungstag der Anmeldung: 04.02.2004
(73) Patentinhaber: Bayer Industry Services GmbH & Co. OHG, 51368 Leverkusen (DE)
(72) Erfinder: Vosteen, Bernhard, Prof.Dr., 51061 Köln (DE); Beyer, Joachim, 51515 Kürten (DE); Bonkhofer, Theodor-Gerhard, 45159 Essen (DE); Fleth, Olaf, 41515 Grevenbroich (DE); Wieland, Andrea, 9422 Maria Rojach (AT); Pohontsch, Andreas, 02694 Grossdubrau (DE); Kanefke, Rico, 04420 Grosslehna (DE); Standau, Ewa, 06179 Langenbogen (DE); Müller, Claus, 51515 Kürten (DE); Nolte, Michael, 38642 Goslar (DE); Kölser, Heinz, Prof.Dr.-Ing.habil., 55218 Ingelheim (DE)

(56) Entgegenhaltungen:
- DE-A- 4 422 661
- DE-A- 19 850 054
- US-A- 5 900 042
- PATENT ABSTRACTS OF JAPAN vol. 2000, no. 10, 17. November 2000 (2000-11-17) & JP 2000 197811 A (KAWASAKI HEAVY IND LTD), 18. Juli 2000 (2000-07-18)

## Beschreibung

Die Erfindung betrifft ein Verfahren zur Abscheidung von Quecksilber aus Rauchgasen von Hochtemperaturanlagen, insbesondere von Kraftwerken und Abfallverbrennungsanlagen.

Aufgrund der hohen Toxizität von Quecksilber, insbesondere von organisch gebundenem Quecksilber, das direkt oder indirekt über die Nahrungskette auch vom Menschen aufgenommen wird, existieren strenge Grenzwerte für die gesetzlich zulässige Emission von Quecksilber z.B. aus Verbrennungsanlagen und Kraftwerken. Trotz der heute bereits niedrigen Quecksilber-Reingaskonzentrationen - der derzeit in Deutschland zulässige Halbstundenmittelwert für Quecksilberemissionen aus Abfallverbrennungsanlagen beträgt 30 µg/m³ i. N. tr. (i. N. tr.: im Normalzustand trocken) - werden aufgrund großer Volumenströme, beispielsweise aus Großkraftwerken, beachtliche Quecksilberfrachten erzielt, so dass eine weitere Minderung der derzeit zulässigen Grenzwerte angestrebt wird.

Diverse Verfahren zur Minderung von Quecksilberemissionen aus Kraftwerken, Abfallverbrennungsanlagen oder dgl. sind aus der Literatur bekannt. Welches der Verfahren für eine bestimmte Anwendung zweckmäßig ist, hängt stark von der eingebrachten Fracht und vom Chlorgehalt des Feuerungsgutes ab. Bei hohem Chlorgehalt ist der Anteil an ionischem Quecksilber im Rauchgas hoch. Ionisches Quecksilber lässt sich gut in Wäschern abscheiden. Das quasi-wasserunlösliche metallische Quecksilber kann beispielsweise durch den Zusatz von Oxidationsmitteln, wie Peroxide, Ozon oder Natriumchlorit, im Kesselrohgas vor der Rauchgasreinigung oder im entstaubten Kesselrohgas in ionisches Quecksilber überführt und anschließend in Wäschern abgeschieden werden. Weitere Verfahren zur Abscheidung des Quecksilbers sind: der Zusatz von Reaktionsmitteln, wie Natriumtetrasulfit, zur Bindung des Quecksilbers mittels Schwefel im Kesselrohgas vor Rauchgasreinigung oder im teilgereinigten Reingas; die verbesserte Auswaschung von ionischem Quecksilber durch pH- bzw. pCl-Absenkung in der sauren Wäsche oder durch Beaufschlagung mit 1,3,5-Triazin-2,4,6-trithiol (Trimercapto-S-triazin, TMT) in der schwach sauren oder schwach alkalischen Wäsche; die sorptive Abscheidung von ionischem und metallischem Quecksilber unter Zusatz von pulvrigen Sorbentien oder zerstäubten Suspensionen.

Bisherige Techniken zur Minderung sind nicht ausreichend effektiv und sind aufgrund ihrer z.T. hohen Zusatzinvestitionen und dem zusätzlichen Betriebsmittelverbrauch relativ teuer.

Aufgabe der Erfindung ist es, ein Verfahren zur Abscheidung von Quecksilber, insbesondere zur weitgehend vollständigen Abscheidung von Quecksilber (Hg), aus Rauchgasen von Hochtemperaturprozessen bereitzustellen. Das Verfahren soll breitestmögliche Anwendung finden, wie im Falle von im Wesentlichen konstanten niedrigen Hg-Konzentrationen, z.B. in Kohlekraftwerken, aber auch im Falle von relativ hohen Hg-Konzentrationen, z.B. in der Klärschlammverbrennung, oder sehr hohen Hg-Konzentrationen z.B. in der Hausmüll- oder Sondermüllverbrennung. Des Weiteren sollte das Verfahren keiner umfangreichen Nachrüstung der Hochtemperaturanlagen bedürfen sowie möglichst geringer zusätzlicher Betriebsmittel, so dass das Verfahren kostengünstig implementiert und betrieben werden kann.

Gegenstand der Erfindung ist ein Verfahren zur Abscheidung von Quecksilber aus Rauchgasen von Hochtemperaturanlagen, insbesondere von Kraftwerken und Abfallverbrennungsanlagen, welches darin besteht, dass der, gegebenenfalls mehrstufigen, Feuerung und/oder dem Rauchgas in einem der Feuerung nachgeschalteten Anlagenteil Brom und/oder eine bromhaltige Verbindung und/oder eine Mischung verschiedener bromhaltiger Verbindungen zugeführt wird, wobei die Temperatur beim Kontakt der bromhaltigen Verbindung mit dem Rauchgas mindestens 500°C, vorzugsweise mindestens 800°C, beträgt, die Verbrennung in Gegenwart einer schwefelhaltigen Verbindung, insbesondere Schwefeldioxid, gegebenenfalls unter Zusatz von Schwefel und/oder einer schwefelhaltigen Verbindung und/oder einer Mischung verschiedener schwefelhaltiger Verbindungen erfolgt und anschließend das Rauchgas einer, gegebenenfalls mehrstufigen, Reinigung zur Abtrennung von Quecksilber aus dem Rauchgas unterzogen wird, welche eine Nasswäsche und/oder eine Trockenreinigung umfasst.

Die Abscheidung von Quecksilber aus Rauchgasen in einer der Verbrennung oder einem ähnlichen Hochtemperaturprozess nachgeschalteten Rauchgasreinigung hängt entscheidend davon ab, in welcher Speziesform das Quecksilber vor Eintritt in die Rauchgasreinigung vorliegt. Ein möglichst hoher Anteil an ionischem Quecksilber ist von Vorteil, da das ionische Quecksilber gut wasserlöslich, also auswaschbar, sowie an diversen Adsorbentien gut adsorbierbar ist. Der Zusatz von Brom bzw. bromhaltigen Verbindungen zur Feuerung bewirkt unter den gegebenen Bedingungen eines Hochtemperaturprozesses oder dgl. in Gegenwart einer schwefelhaltigen Verbindung, insbesondere in Gegenwart von Schwefeldioxid, eine weitgehende, im Wesentlichen vollständige, Oxidation des Quecksilbers und erlaubt daher eine starke Abscheidung des Quecksilbers aus Rauchgasen.

Unter Hochtemperaturanlagen werden im Sinne der vorliegenden Erfindung insbesondere Abfallverbrennungsanlagen, beispielsweise Hausmüll-, Sondermüll- und Klärschlammverbrennungsanlagen, sowie Kraftwerke, beispielsweise Steinkohleoder Braunkohlekraftwerke, aber auch sonstige Anlagen für Prozesse hoher Temperatur, wie z.B. das Zementbrennen, sowie Abfall mitverbrennende Hochtemperaturanlagen oder kombinierte (mehrstufige) Hochtemperaturanlagen, wie z.B. Kraftwerke oder Zementdrehrohröfen mit vorgeschalteter Abfallpyrolyse oder Abfallvergasung, verstanden. Die Dimension der Hochtemperaturanlage spielt für das erfindungsgemäße Verfahren keine Rolle. Vorteilhaft an dem erfindungsgemäßen Verfahren ist gerade, dass es auf unterschiedliche Typen von Hochtemperaturanlagen und auf Hochtemperaturanlagen von unterschiedlicher Größenordnung anwendbar ist. Dies schließt Anlagen mit einem Rauchgasvolumenstrom von nur 15·10³ m³ i. N. tr./h, beispielsweise zur Klärschlammverbrennung, oder von 50·10³ m³ i. N. tr./h, z.B. in Sondermüllverbrennungsanlagen, oder von 150·10³ m³ i. N. tr./h, z.B. in der Hausmüllverbrennung, ebenso ein wie Großkraftwerke mit z.B. 2-3·10⁶ m³ i. N. tr./h.

Für das erfindungsgemäße Verfahren ist es unerheblich, in welcher Form das zugeführte Brom vorliegt. Es ist möglich, freies oder organisch gebundenes oder anorganisch gebundenes Brom einzusetzen. Das Brom oder die bromhaltigen Verbindungen können einzeln oder im Gemisch zugeführt werden. Besonders bevorzugt wird eine wässrige Lösung von Bromwasserstoff oder ein Alkalibromid, insbesondere Natriumbromid, oder eine wässrige Lösung des Alkalibromids verwendet. Durch diese Ausführungsform ist das Verfahren wirtschaftlich besonders interessant, da die Kosten für zusätzliche Betriebsmittel niedrig gehalten werden können. Weiterhin bevorzugt ist eine Ausführungsform, in der die bromhaltige Verbindung bzw. das Gemisch verschiedener bromhaltiger Verbindungen aus bromreichen Abfallstoffen, wie z.B. niedrig- oder hochhalogenierte Flüssigabfälle, bestehen, welche Teil des Verbrennungsguts sind oder dem Verbrennungsgut, beispielsweise Sondermüll, beigemengt werden.

Das erfindungsgemäße Verfahren findet in Gegenwart einer schwefelhaltigen Verbindung statt. Die Zugabe einer bromhaltigen Verbindung nach dem erfindungsgemäßen Verfahren führt zu einer Gasphasenreaktion zwischen Quecksilber und Brom in Gegenwart von Schwefeldioxid. Da bei den im Sinne dieser Erfindung üblichen Verbrennungs- und sonstigen Hochtemperaturprozessen in der Regel Schwefeldioxid entsteht, ist für das erfindungsgemäße Verfahren in der Regel ein ausreichendes Angebot einer schwefelhaltigen Verbindung vorhanden. Ein ausreichendes Angebot im Sinne dieser Erfindung liegt vor, wenn unter Zugabe einer bromhaltigen Verbindung zu der Feuerung der Gehalt an Schwefeldioxid im Rauchgas vor der Rauchgasreinigung deutlich größer als Null ist. Wird bei einem Verbrennungsprozess jedoch kein oder nicht ausreichend Schwefeldioxid gebildet, muss dem Prozess eine schwefelhaltige Verbindung zugeführt werden. Dies kann in Form von freiem oder gebundenem Schwefel, beispielsweise Schwefelgranulat, Abfallschwefelsäure oder andere schwefelreiche Abfallstoffe, erfolgen. Darüber hinaus kann insbesondere auch zur Minderung eines zu hohen Gehalts an freien Halogenen im Rauchgas eine schwefelhaltige Verbindung zugesetzt werden, wenn z.B. mehr bromhaltige Verbindung zugeführt worden ist, als zur Oxidation des vorliegenden Quecksilbers notwendig ist. Die Zudosierung einer schwefelhaltigen Verbindung kann z.B. nach dem in der bisher unveröffentlichten Patentanmeldung DE 10131464 beschriebenen Verfahren zur korrosions- und emissionsarmen Mitverbrennung hochhalogenierter Abfälle in Abfallverbrennungsanlagen erfolgen. Nach diesem Verfahren wird in den primären und/oder sekundären Feuerraum Schwefel oder ein entsprechender Schwefelträger geregelt zudosiert. Die Regelung der Schwefelmenge erfolgt im Wesentlichen proportional zur mit den Abfällen eingetragenen aktuellen Halogengesamtfracht im Kesselrauchgas. Der zudosierte Schwefel verbrennt im Feuerraum zu Schwefeldioxid, was kesselintern zu einer weitgehenden Unterdrückung zwischenzeitlich gebildeter freier Halogene im Kesselrauchgas sowie nachfolgend zur stabilen Halogeneinbindung in der alkalischen Wäsche führt. Die Zudosierung von Schwefel wird so geregelt, dass der Soll-Schwefeldioxidgehalt im Rauchgas am Kesseleingang oder der Soll-Schwefeldioxidrestgehalt am Kesselende, d.h. im Kesselrohgas vor einer beispielsweise nassen Rauchgasreinigung, im stationären Betriebszustand über einen einfachen primären Regelkreis eingehalten werden.

Wird speziell Natriumbromid der Feuerung zugesetzt, so ist ein Mehrverbrauch an Schwefeldioxid zu beobachten, welcher auf die Sulfatierung des Natriumbromids im Hochtemperaturbereich zurückzuführen ist.

Andererseits stellt ein relativ hoher Gehalt einer schwefelhaltigen Verbindung, insbesondere an Schwefeldioxid, im Rauchgas keinen Nachteil für das erfindungsgemäße Verfahren dar. Ein hoher Gehalt an Schwefeldioxid kann beispielsweise bei der Verbrennung von Steinkohlen auftreten, welche üblicherweise zwischen 0,5 und 1 Gew.-% Schwefel enthalten, oder bei einer geregelten Zudosierung einer schwefelhaltigen Verbindung, welche zur Unterdrückung zwischenzeitlich gebildeter freier Halogene (s.o.) zugesetzt wird. Unter den gegebenen Bedingungen eines Hochtemperaturprozesses findet auch in Gegenwart von überschüssigem Schwefeldioxid die Oxidation des Quecksilbers statt, welche nach dem erfindungsgemäßen Verfahren durch den Zusatz einer oder mehrerer bromhaltiger Verbindungen erzielt wird. Darin liegt ein besonderer Vorteil des vorliegenden Verfahrens, denn die Oxidation des Quecksilbers durch den Zusatz von bromhaltigen Verbindungen zeigt sich - anders als durch den Zusatz von chlorhaltigen Verbindungen - weitgehend unempfindlich gegenüber einem Überschuss an Schwefeldioxid.

Die Zugabe einer bromhaltigen Verbindung sowie gegebenenfalls einer schwefelhaltigen Verbindung erfolgt erfindungsgemäß zur Feuerung und/oder zum Rauchgas in einem der Feuerung nachgeschalteten Anlagenteil, wobei die Temperatur beim Kontakt der bromhaltigen Verbindung mit dem Rauchgas mindestens 500°C, vorzugsweise mindestens 800°C, beträgt. Die bromhaltige Verbindung, z.B. Natriumbromid, kann entweder in fester, z.B. als Salz, oder flüssiger Form, z.B. als wässrige Lösung, dem zu verfeuernden Abfallgemisch, der Kohle oder dgl. vor der Feuerung beigemengt werden. Die Zugabe kann auch in einen der Feuerung vorgeschalteten Anlagenteil erfolgen, beispielsweise einer Pyrolysetrommel, welche z.B. dem thermischen Aufschluss mitverbrannter Abfallstoffe dient, oder einer Kohlemühle. Die Verbindung kann ebenso während des Verbrennungsprozesses zugeführt werden. Umfasst die Feuerung mehrere Stufen, z.B. eine primäre und eine sekundäre Feuerung, kann die bromhaltige Verbindung in eine oder beide Brennkammern, beispielsweise in den Drehrohrofen und/oder die Nachbrennkammer, ebenfalls in fester oder flüssiger Form eingeführt werden. Vorzugsweise wird eine wässrige Lösung der Verbindung in einer der Brennkammern eingedüst. Ferner kann die Zugabe auch nach der Verbrennung, z.B. in einem nachgeschalteten Abhitzekessel, erfolgen, sofern die Temperatur des Rauchgases ausreichend hoch ist, d.h. mindestens 500°C, insbesondere mindestens 800°C, beträgt. In anderen Hochtemperaturprozessen, wie z.B. dem Zementbrennen, wird beispielsweise der heiße Ofenkopf des Zementdrehrohrofens und/oder die befeuerte Entsäuerungsstufe des nachgeschalteten Zementrohmehlvorwärmers mit der bromhaltigen Verbindung bestückt.

In einer weiteren Ausführungsform des erfindungsgemäßen Verfahrens ist es auch möglich, die bromhaltige Verbindung, beispielsweise eine wässrige Lösung von Bromwasserstoff oder von Natriumbromid, fein dispergiert der Verbrennungsluft und/oder gegebenenfalls einem rückgeführten Teilstrom, insbesondere rückgeführtem Rauchgas, rückgeführter Asche und rückgeführten Flugstäuben, zuzuführen.

Um eine möglichst vollständige, insbesondere 100%ige, Oxidation des Quecksilbers durch die Zugabe einer bromhaltigen Verbindung zu erzielen, wird die bromhaltige Verbindung bevorzugt in einem Massenverhältnis von Brom zu Quecksilber im Bereich von 10² bis 10⁴ zugegeben. Wird die bromhaltige Verbindung in großem Überschuss zugefügt, wirkt sich dies nicht nachteilig auf das erfindungsgemäße Verfahren aus. Ein zu großer Überschuss muss jedoch vermieden werden, nicht zuletzt aus Kostengründen. Gegebenenfalls müssen zwischenzeitlich gebildete freie Halogene, wie z.B. freies Brom, durch die Zugabe einer schwefelhaltigen Verbindung unterdrückt bzw. stabil eingebunden werden (s.o.), da auch Bromemissionen in der Regel gesetzlich festgelegten Grenzwerten unterliegen.

Die Oxidation von Quecksilber kann prinzipiell auch durch chlorhaltige oder jodhaltige Verbindungen erfolgen. Es zeigt sich jedoch, dass bromhaltige Verbindungen Quecksilber unter den gegebenen Bedingungen von Hochtemperaturprozessen, wie der Temperatur, und insbesondere auch bei einem hohen Gehalt an Schwefeldioxid (s.o.) wirksamer oxidieren als chlorhaltige Verbindungen. Jodhaltige Verbindungen oxidieren im Vergleich zu bromhaltigen Verbindungen Quecksilber wirksamer. Aus wirtschaftlichen Gesichtspunkten werden in dem erfindungsgemäßen Verfahren allerdings bromhaltige Verbindungen bevorzugt eingesetzt. Gegebenenfalls in den Abfallstoffen, z.B. in Sondermüll, vorliegende chlor- oder jodhaltige Verbindungen tragen demnach zur Oxidation des Quecksilbers bei. In einer bevorzugten Ausführungsform erfolgt das erfindungsgemäße Verfahren zusätzlich zu den bromhaltigen Verbindungen in Gegenwart von Chlor und/oder Jod und/oder einer chlorhaltigen Verbindung und/oder einer jodhaltigen Verbindung und/oder einem Gemisch solcher Verbindungen. Die chlorhaltige und/oder jodhaltige Verbindung kann beispielsweise in Form von chlor- oder jodreichen Abfallstoffen in Ergänzung zu oder unter teilweisem Ersatz der zugesetzten bromhaltigen Verbindung zugeführt werden.

Nach dem erfindungsgemäßen Verfahren folgt nach der Verbrennung oder einem ähnlichen Hochtemperaturprozess unter Zusatz einer bromhaltigen Verbindung eine Reinigung des Rauchgases, wodurch das oxidierte Quecksilber möglichst weitgehend aus dem Rauchgas abgeschieden wird. Verschiedene Rauchgasreinigungsverfahren zur Abscheidung von u.a. ionischem Quecksilber sind aus dem Stand der Technik bekannt. Sie basieren entweder auf einer Nasswäsche oder einer Trockenreinigung oder einer Kombination beider und kann ggf. mehrstufig sein. Die Nasswäsche umfasst z.B. eine saure Wäsche, welche beispielsweise in einer mit Kreislaufwaschwasser bedüsten Quenche, einem Druckdüsen- oder Rotationszerstäuberwäscher oder einem Füllkörperwäscher erfolgt. Eine Wäsche kann aber ggf. auch nur schwachsauer oder alkalisch ausgeführt sein, beispielsweise im Fall niedriger Chlorwasserstofffrachten, aber hoher Schwefeldioxidfrachten.

In einer bevorzugten Ausführungsform umfasst die Rauchgasreinigung eine mehrstufige nasse Rauchgaswäsche mit mindestens einer stark sauren (pH kleiner 1) und/oder mindestens einer schwach sauren (pH 3-4) und/oder mindestens einer alkalischen Waschstufe.

Die Rauchgasreinigung kann auch eine auf der Adsorption von ionischen Quecksilberverbindungen basierende Trockenreinigung umfassen. Eine solche Reinigung kann beispielsweise durch quasitrockene Entschwefelung in einem Sprühtrockner durchgeführt werden, welcher mit einer Kalkmilch-Kohle-Suspension beaufschlagt ist, oder mit Hilfe von Festbettadsorbern, z.B. auf Basis von körniger Aktivkohle oder von Herdofenkoks oder von Mischungen derartiger Adsorbentien mit gekörntem Kalk, oder mit Hilfe von Flugstromadsorbern, z.B. elektrostatischen Gasreinigungsfiltern (EGR-Filter), oder mit Hilfe von Gewebefiltern, welche mit einem eingeblasenen feinpulvrigen Kalkhydrat-Aktivkohle- oder Kalkhydrat-Herdofenkoks-Gemisch beaufschlagt sind. Auch Zeolithe eignen sich zur Abscheidung von quecksilberhaltigen Verbindungen. Im Bezug auf die trockene Rauchgasreinigung zeigt sich ein weiterer Vorteil des erfindungsgemäßen Verfahrens. Die Anwendung des Verfahrens ist insbesondere auch für jene Hochtemperaturanlagen interessant, welche über keine nasse Rauchgasreinigung, sondern ausschließlich über eine trockene Reinigung mit einer Quecksilbersorptionsstufe verfügen. Quecksilberbromid HgBr₂ adsorbiert stärker an Trockensorbentien als Quecksilberchlorid HgCl₂. Beispielsweise verstärkt sich die Adsorption von Quecksilber am Flugstaub von EGR-Filtern.

In einer bevorzugten Ausführungsform umfasst die Rauchgasreinigung daher mindestens eine trockene oder quasitrockene, auf Adsorption basierende Reinigungsstufe, insbesondere unter Verwendung von elektrostatischen oder filternden Staubabscheidern.

Des weiteren werden die mit Quecksilber beladenen Flugstäube aus gegebenenfalls vorhandenen Staubabscheidern zwecks Quecksilberentfrachtung vorzugsweise thermisch nachbehandelt, insbesondere in einer auf Temperaturen von mindestens 200°C beheizten Drehtrommel.

Bevorzugt wird in dem erfindungsgemäßen Verfahren der Quecksilbergehalt des Rauchgases, insbesondere der Gehalt an metallischem Quecksilber, nach der Rauchgasreinigung kontinuierlich gemessen und anhand des gemessenen Quecksilbergehalts die Menge an zugeführtem Brom und/oder bromhaltigen Verbindungen und/oder der Mischung bromhaltiger Verbindungen sowie gegebenenfalls Schwefel und/oder schwefelhaltigen Substanzen und/oder der Mischung schwefelhaltiger Substanzen geregelt. Ein relativ hoher Gehalt an metallischem Quecksilber im Rauchgas ist ein Indikator dafür, dass die Oxidation des Quecksilbers unvollständig verläuft und damit das Quecksilber in der Rauchgasreinigung unvollständig abgetrennt wird. Um Quecksilber möglichst vollständig zu oxidieren, muss in einem solchen Fall mehr bromhaltige Verbindung zugeführt werden. Zusätzlich kann der Gehalt an ionischem Quecksilber nach der Rauchgasreinigung gemessen werden und daraus der Abscheidegrad des ionischen Quecksilbers in der Rauchgasreinigung bestimmt werden. Der Gehalt an metallischem Quecksilber und ggf. an Quecksilber insgesamt im Kesselrohgas kann nach entsprechender Gasaufbereitung beispielsweise mit Hilfe eines Differenz-Absorptionsphotometers gemessen werden. Die kontinuierliche Messung von metallischem Quecksilber und ggf. auch von Quecksilber insgesamt im Reingas nach der nassen und/oder trockenen Rauchgasreinigung erfolgt vorzugsweise vor einer gegebenenfalls vorhandenen, nachgeschalteten SCR-Entstickungsanlage (SCR: selective catalytic reduction), da der metalloxidreiche Festbettkatalysator erhebliche Mengen an metallischem Quecksilber adsorbiert.

Nachfolgend wird die Erfindung anhand der Beispiele unter Bezugnahme auf die anliegenden Figuren näher erläutert. Es zeigen:

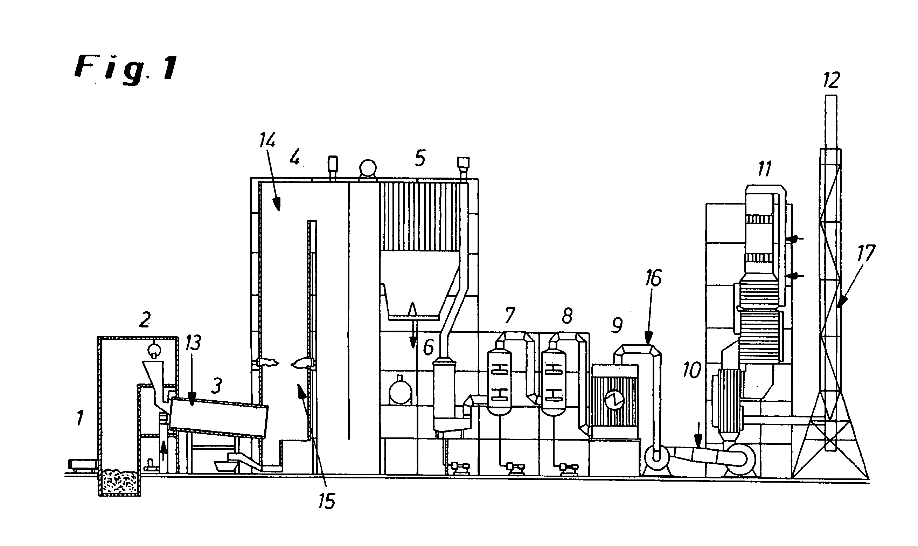

- Figur 1: ein Schema einer Sondermüllverbrennungsanlage

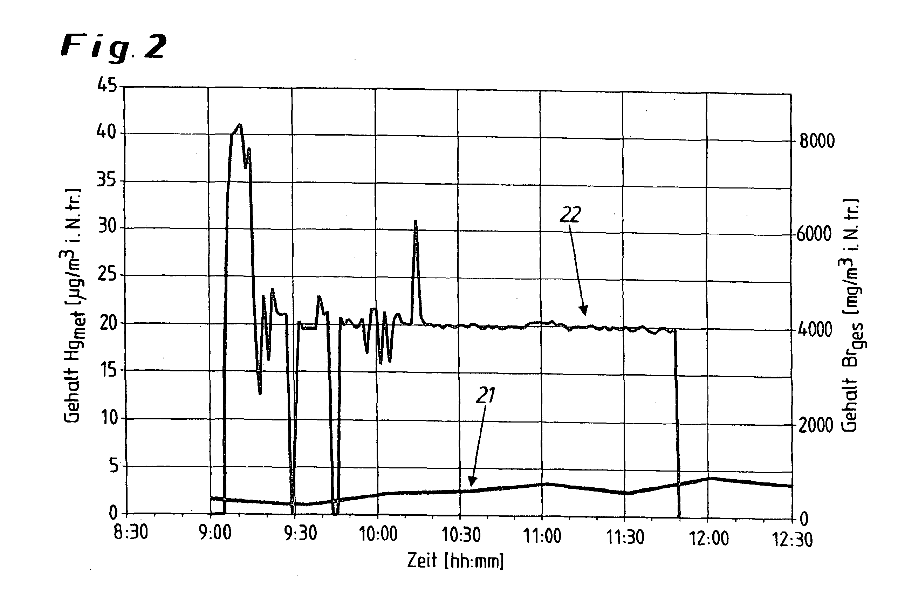

- Figur 2: ein Diagramm, welches den Gehalt von metallischem Quecksilber (Hgₘₑₜ) im gewaschenen Kesselrauchgas, d.h. im Reingas, nach der Nasswäsche in µg/m³ i. N. tr. (Kurve 21, linke Ordinate) sowie den Gesamtgehalt von Brom (Br_{ges}) im Kesselrauchgas in mg/m³ i. N. tr. (Kurve 22, rechte Ordinate) in Abhängigkeit von der Zeit darstellt,

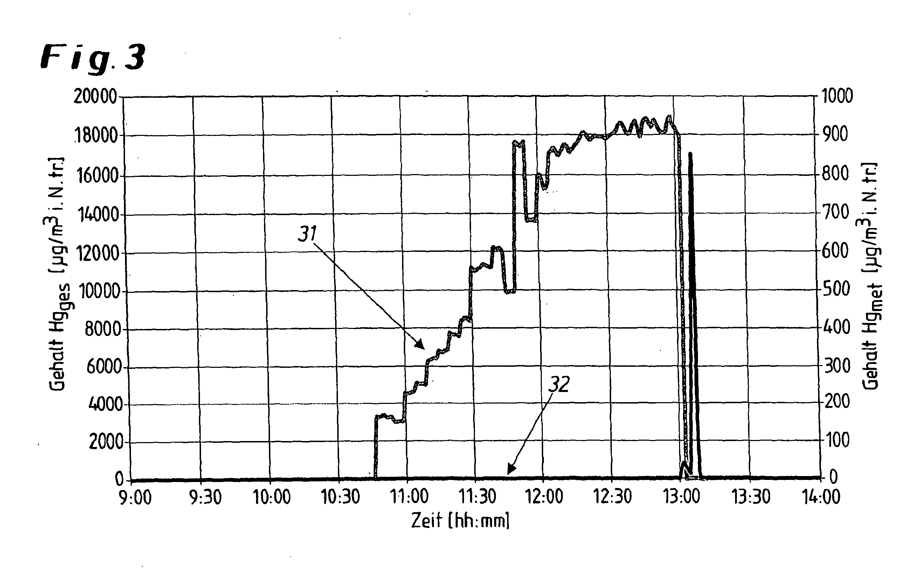

- Figur 3: ein Diagramm, welches den Gesamtgehalt von Quecksilber (Hg_{ges}) im Kesselrauchgas, d.h. zugleich im Kesselrohgas, vor der Nasswäsche in µg/m³ i. N. tr. (Kurve 31, linke Ordinate) sowie den Gehalt von metallischem Quecksilber (Hgₘₑₜ) im Reingas nach der Nasswäsche in µg/m³ i. N. tr. (Kurve 32, rechte Ordinate) in Abhängigkeit von der Zeit darstellt,

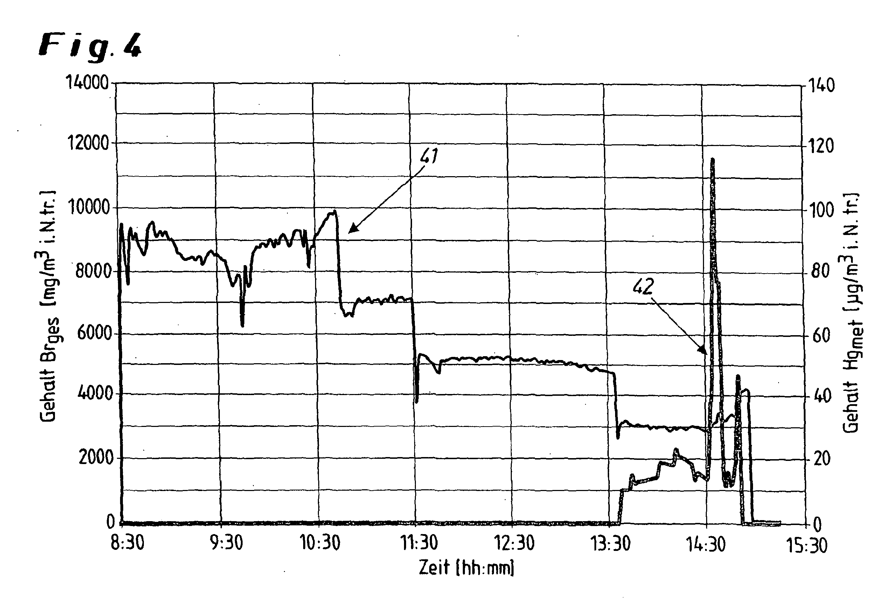

- Figur 4: ein Diagramm, welches den Gesamtgehalt von Brom (Br_{ges}) im Kesselrauchgas, d.h. zugleich im Kesselrohgas, vor der Nasswäsche in mg/m³ i. N. tr. (Kurve 41, linke Ordinate) sowie den Gehalt von metallischem Quecksilber (Hgₘₑₜ) im Reingas nach der Nasswäsche in µg/m³ i. N. tr. (Kurve 42, rechte Ordinate) als Funktion der Zeit darstellt,

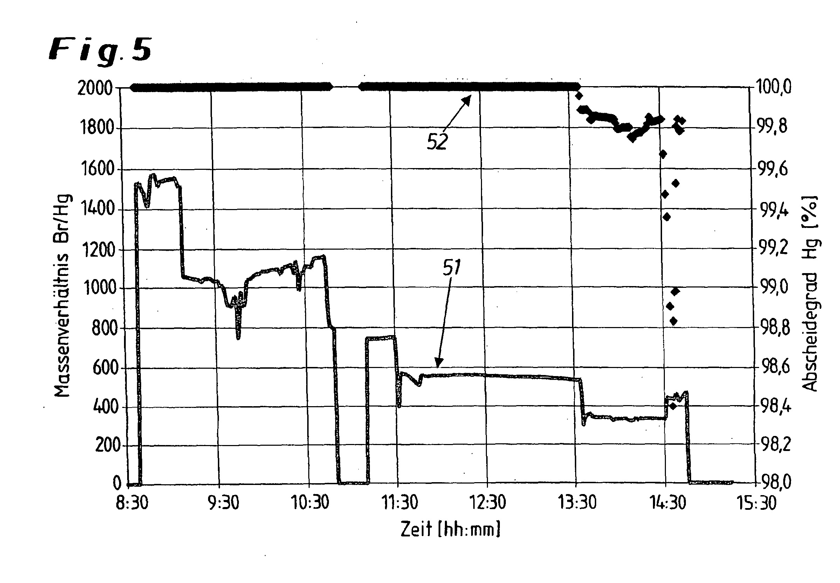

- Figur 5: ein Diagramm, welches das Massenverhältnis von Brom zu Quecksilber im Kesselrauchgas (Kurve 51, linke Ordinate) sowie den erzielten Gesamtabscheidegrad von Quecksilber in der mehrstufigen Nasswäsche in % (Kurve 52, rechte Ordinate) als Funktion der Zeit darstellt,

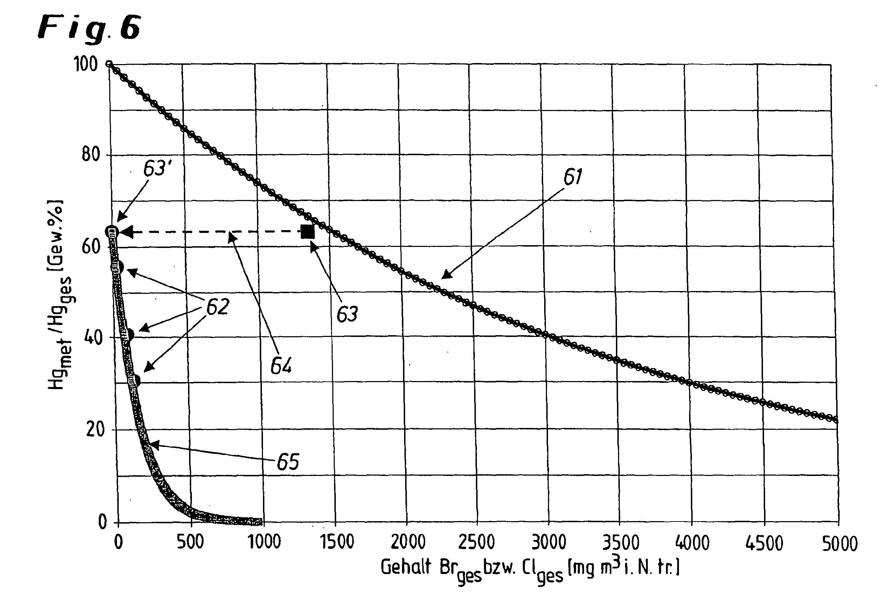

- Figur 6: ein Diagramm, welches das Gewichtsverhältnis von metallischem Quecksilber zur Summe aus metallischem und ionischem Quecksilber (Hgₘₑₜ/Hg_{ges}), d.h. den Hgₘₑₜ₋Speziesanteil im Kesselrohgas, in Gew.-% als Funktion des Gesamtgehaltes an Chlor (Kurve 61) bzw. an Brom (Kurve 62) im Kesselrohgas in mg/m³ i. N. tr. darstellt,

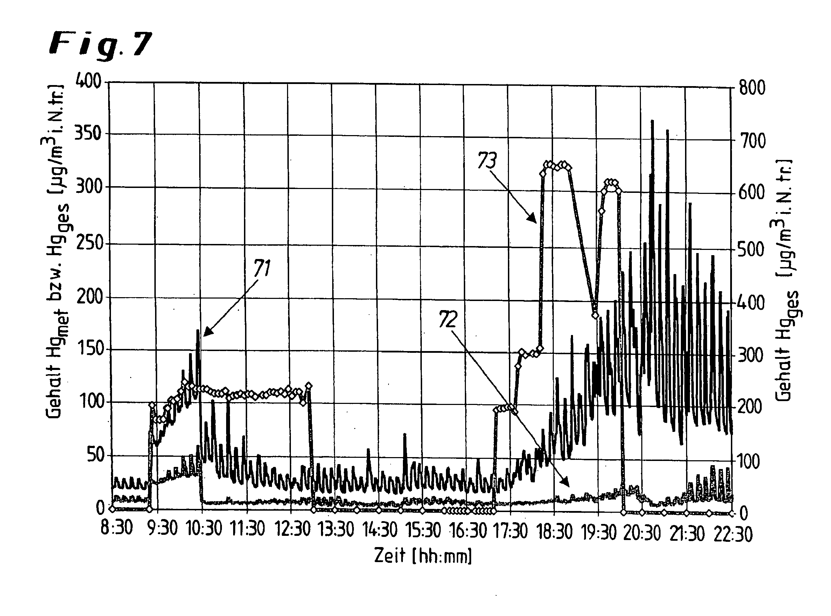

- Figur 7: ein Diagramm, welches den Gesamtgehalt an Quecksilber (Hg_{ges}) im entstaubten Rohgas nach der elektrostatischen Gasreinigung (Kurve 71, linke Ordinate) bzw. den Gehalt an metallischem Quecksilber (Hgₘₑₜ) nach der elektrostatischen Gasreinigung (Kurve 72, linke Ordinate) sowie die durch Quecksilberzudosierung herbeigeführte Anhebung des Gesamtgehalts an Quecksilber (Hg_{ges}) im Kesselrauchgas (Kurve 73, rechte Ordinate) als Funktion der Zeit darstellt,

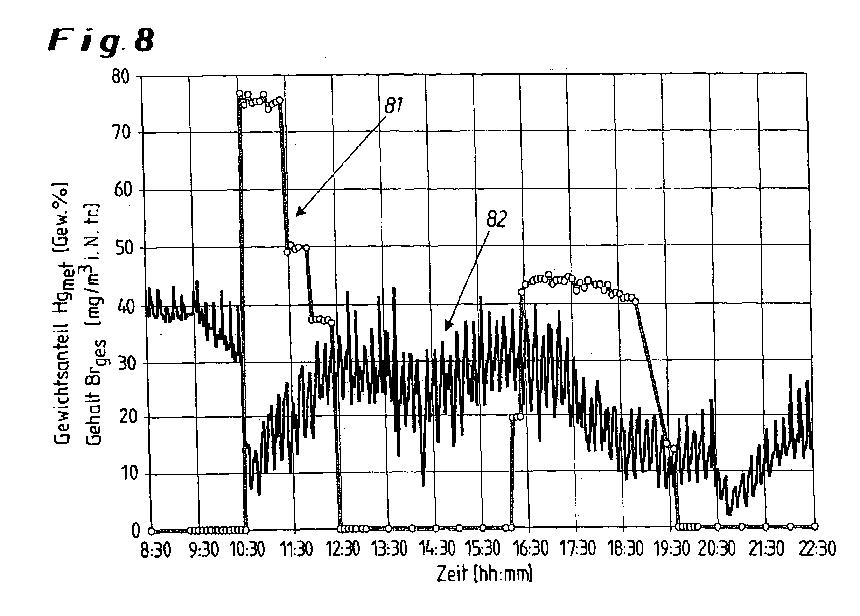

- Figur 8: ein Diagramm, welches das Gewichtsverhältnis von metallischem Quecksilber (Hgₘₑₜ) zu der Summe aus metallischem und ionischem Quecksilber (Hg_{ges}), d.h. den Hgₘₑₜ-Speziesanteil (Hgₘₑₜ/Hg_{ges}), im entstaubten Kesselrohgas nach der elektrostatischen Gasreinigung in Gew.-% (Kurve 82) sowie den Gesamtgehalt an Brom (Br_{ges}) im Kesselrauchgas in mg/m³ i. N. tr. (Kurve 81) als Funktion der Zeit darstellt.

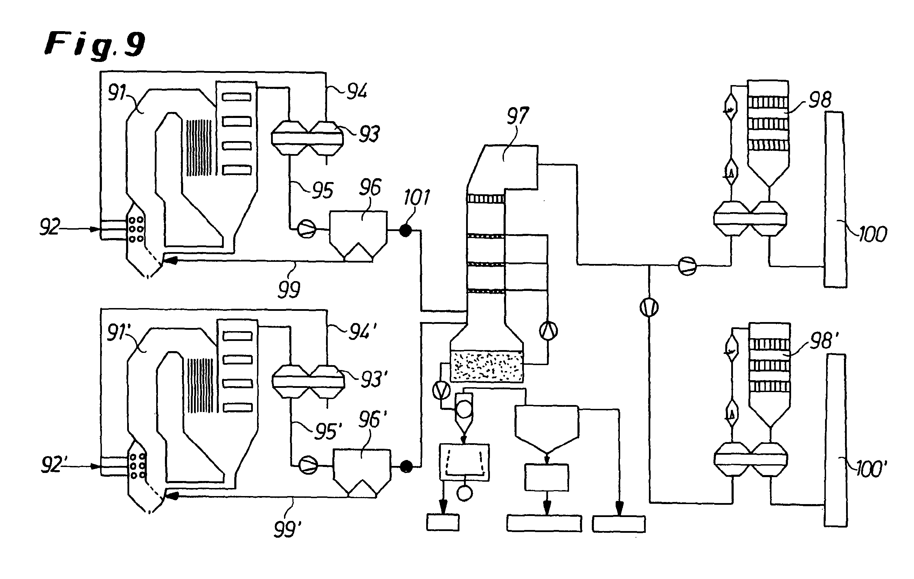

- Figur 9: ein Schema eines Industriekraftwerks mit zwei Schmelzkammerkesseln.

### Beispiele

Die Beispiele 1-4 wurden in einer dem Schema in Figur 1 entsprechenden Sondermüllverbrennungsanlage der Bayer AG in Leverkusen durchgeführt. Der Drehrohrofen 3 als primärer Feuerraum wird mit Feststoffabfällen aus dem Bunker 1 über einen Krangreifer 2, mit Flüssigabfällen aus einem Flüssigabfalltank sowie mit Abfallgebinden über eine Gebindeaufgabe befeuert. Auch die Nachbrennkammer 4 als sekundärer Feuerraum wird mit Flüssigabfällen befeuert. Das Rauchgas wird über den Abhitzekessel 5 abgekühlt und anschließend, als sogenanntes Kesselrohgas, der nassen Rauchgasreinigung (mehrstufige Wäsche) zugeführt, welche eine Quenche 6, einen sauren Rotationszerstäuberwäscher 7, einen alkalischen Rotationszerstäuberwäscher 8 und eine elektrostatische Gasreinigung mit Wasserdampf-Teilkondensation 9 (KEGR) umfasst. Über Saugzüge 10 gelangt das gewaschene Rauchgas, als sogenanntes Reingas, in die nachgeschaltete katalytische Entstickungsanlage 11 (selektive katalytische Entstickung des Reingases mittels Ammoniak) und wird von dort über den Kamin 12 emittiert. Der Gehalt an metallischem Quecksilber (Hgₘₑₜ) sowie gegebenenfalls der Gesamtgehalt an Quecksilber (Hg_{ges}) im gewaschenen Reingas nach KEGR wurde - nach entsprechender Aufbereitung - an der Messstelle 16 mit Hilfe eines Differenz-Absorptionsphotometers kontinuierlich bestimmt. Der Gehalt an Quecksilber insgesamt (Hg_{ges}) im emittierten Reingas wurde an der Messstelle 17, d.h. in einer Kaminhöhe von 22 m, quasikontinuierlich bestimmt durch Amalgamierung an einer periodisch ausgeheizten Goldfolie mit nachfolgendem Differenz-Absorptionsphotometer.

Beispiel 5 beschreibt die Anwendung des erfindungsgemäßen Verfahrens in einem Kohlekraftwerk der Bayer AG in Uerdingen, welches im Wesentlichen einen Schmelzkammerkessel und eine kraftwerkstypische Rauchgasreinigung, bestehend aus einer trockenen elektrostatischen Gasreinigung (EGR), einem schwachsauren, auf Kalkstein basierten Nasswäscher zur Rauchgasentschwefelung sowie einer SCR-Entstickungsanlage (SCR: selective catalytic reduction), umfasst.

### Beispiel 1

Über einen Zeitraum von 116 Minuten wurde dem sekundären Feuerraum (Nachbrennkammer 4) über die Schauluke 15 eine Serie von Proben von metallischem Quecksilber in Kunststoffkapseln zugeführt (in Summe 3400 g, siehe Tabelle 1). Die Zugabe erfolgte in Abständen von ca. 5-10 Minuten mit zunehmender Quecksilbermenge. Das eingeworfene Quecksilber verdampft innerhalb von ca. 2-4 Minuten; demzufolge können die im Kesselrauchgas mit einem Volumenstrom von ca. 45·10³ m³ i. N. tr./h aufgetretenen momentanen Spitzenkonzentrationen an Quecksilber abgeschätzt werden. Die Abschätzung liefert zum Versuchsende hin Spitzenkonzentrationen von mehr als 130·10³ µg/m³ i. N. tr.

**Tabelle 1: Zugabe der Hg-Proben**

| **Uhrzeit** | **Hg-Menge [g]** | **Uhrzeit** | **Hg-Menge [g]** |
|---|---|---|---|
| 9:24 | 5 | 10:32 | 180 |
| 9:32 | 10 | 10:37 | 200 |
| 9:38 | 15 | 10:43 | 220 |
| 9:49 | 20 | 10:48 | 240 |
| 9:54 | 40 | 10:53 | 260 |
| 9:59 | 60 | 10:58 | 280 |
| 10:04 | 80 | 11:03 | 300 |
| 10:09 | 100 | 11:08 | 310 |
| 10:15 | 120 | 11:13 | 320 |
| 10:20 | 140 | 11:20 | 340 |
| 10:26 | 160 | | |
| **Versuchsdauer [min]** | | **Hg-Gesamtmenge [g]** | |
| **116** | | **3400** | |

Während des Versuchszeitraums wurde durch Mitverbrennung eines hochbromierten Flüssigabfalls (Zugabe zum Drehrohrofenkopf) im Kesselrauchgas von 45·10³ m³ i.N. tr./h ein Bromgehalt von ca. 4·10³ mg/m³ i. N. tr. aufrechterhalten, wie die Kurve 22 (rechte Ordinate) in Figur 2 zeigt (Bestimmung anhand des Durchsatzes und Bromgehaltes des hochbromierten Flüssigabfalls). Der Rest-SO₂-Gehalt im Kesselrohgas vor der Quenche war dabei mittels Zudosierung von Schwefelgranulat zum Drehrohrofenkopf auf 5,5·10³ mg/Nm³ i. N. tr. ungewöhnlich hoch eingestellt (direkte SO₂-Messung im Kesselrohgas vor der Quenche). Damit war sichergestellt, dass für das erfindungsgemäße Verfahren ein ausreichendes Angebot an Schwefeldioxid vorhanden war. Das sonstige Verbrennungsgut bestand aus Festabfällen und schwachchlorierten Lösemitteln. Vor, während und nach der Quecksilberzugabe wurde an der Messstelle 16, d.h. nach der Rauchgasreinigung, der Gehalt an Quecksilber im Rauchgas gemessen. Wie die Kurve 21 (linke Ordinate) in Figur 2 zeigt, steigt trotz der Zugabe von erheblichen Quecksilbermengen der Gehalt an metallischem Quecksilber, welches durch die Wäsche durchschlägt, praktisch nicht an.

Darüber hinaus sind in Tabelle 2 die momentanen Austragungsströme von Quecksilber um 11:30 Uhr, d.h. kurz nach der Zugabe der letzten Quecksilberprobe und damit zum Zeitpunkt der höchsten Quecksilberkonzentration, aufgeführt, welche mit den Wäscherabwässern der nassen Rauchgasreinigung ausgetragen wurden. Umfangreiche abwasserseitige Messungen belegen, dass ca. 99,93 % des insgesamt ausgetragenen Quecksilbers als ionisches Quecksilber mit dem Abwasser der stark sauren Quenche (pH-Wert kleiner 1) und ca. 0,066 % mit dem Abwasser des alkalischen Rotationszerstäuberwäschers (pH-Wert ca. 7,5) ausgetragen wurden. Der geringe, nicht ausgewaschene Rest von nur 0,004 % des insgesamt ausgetragenen Quecksilbers wurde mit dem gewaschenen Reingas als metallisches Quecksilber ausgetragen. Nachweislich war im gewaschenen Reingas praktisch kein Hgᵢₒₙ zu finden (Hgᵢₒₙ = Null, d.h. vollständige Auswaschung des ionischen Quecksilbers und Somit Hg_{ges} = Hgₘₑₜ).

**Tabelle 2:Momentane Quecksilber-Austragungsströme [g/h] um 11:30 Uhr**

| | |
|---|---|
| Quenche (einschließlich dem sauren Rotationszerstäuberwäscher) | 1931 |
| (Saurer Rotationszerstäuberwäscher, dessen Abwasser zur Quenche rückgeführt wird) | (468) |
| Alkalischer Rotationszerstäuberwäscher | 1,32 |
| Gewaschenes Reingas nach KEGR | 0,069 |

### Beispiel 2

Über einen Zeitraum von 130 Minuten wurde dem sekundären Feuerraum (Nachbrennkammer 4) über eine Düse in der Nachbrennkammerdecke kontinuierlich eine wässrige HgCl₂-Lösung zugeführt. Dabei wurde die zudosierte Menge in Zeitschritten von etwa 5 Minuten angehoben. Figur 3 zeigt den so herbeigeführten Anstieg der Konzentration von Quecksilber im Kesselrauchgas in der Zeit zwischen ca. 10:45 und 13:00 Uhr. Das eindosierte Quecksilber wird in der Nachbrennkammer unverzüglich als metallisches Quecksilber Hgₘₑₜ freigesetzt. Die Gesamtkonzentration von Quecksilber im Kesselrauchgas stieg auf diese Weise bis auf Werte von 18·10³ µg/m³ i. N. tr. an (Kurve 31 und linke Ordinate). Die Hg-Konzentration im Kesselrauchgas wurde aus dem zugegebenen Quecksilbermengenstrom und dem betrieblich gemessenen Rauchgasvolumenstrom berechnet. Während des Versuchszeitraums wurde durch Mitverbrennung eines hochbromierten Flüssigabfalls (Zugabe über einen Brenner am Drehrohrofenkopf) im Kesselrauchgas von 45·10³ m³ i.N. tr./h ein Bromgehalt von ca. 9·10³ mg/m³ i. N. tr. aufrechterhalten (Bestimmung anhand des Durchsatzes und Bromgehalt des mitverbrannten hochbromierten Flüssigabfalls). Der Rest-SO₂-Gehalt im Kesselrohgas vor Quenche war dabei mittels Zudosierung von Schwefelgranulat zum Drehrohrofenkopf auf ca. 4·10³ mg/Nm³ i. N. tr. eingestellt (direkte SO₂-Messung im Kesselrohgas vor der Quenche).

Im Zeitraum zwischen ca. 11:00 und 13:00 Uhr wurde im gewaschenen Reingas nach der KEGR eine Konzentration von metallischem Quecksilber von weniger als 10 µg/m³ i. N. tr. beobachtet. Nachweislich war im gewaschenen Reingas auch hier praktisch kein Hgᵢₒₙ zu finden (Hgᵢₒₙ = Null, d.h. vollständige Auswaschung des ionischen Quecksilbers und somit Hg_{ges} = Hgₘₑₜ). Bei einem kurzzeitigen Ausfall der Bromzugabe gegen 13:05 Uhr stieg die Konzentration von Hgₘₑₜ sprunghaft auf ca. 800 µg/m³ i. N. tr. an und kehrte aber unverzüglich auf ihren niedrigen Ausgangswert von weniger als 10 µg/m³ i. N. tr. zurück, als die Bromzugabe wieder einsetzte (Kurve 32 und rechte Ordinate).

### Beispiel 3

In der Zeit zwischen ca. 8:30 und 14:45 Uhr, d.h. über einen Zeitraum von 675 Minuten, wurde dem sekundären Feuerraum (Nachbrennkammer 4) über eine Düse in der Nachbrennkammerdecke kontinuierlich eine wässrige HgCl₂-Lösung zugerührt. Dabei wurde nunmehr aber der zudosierte Hg-Mengenstrom konstant gehalten, entsprechend einer Konzentration von Quecksilber im Kesselrauchgas von ca. 9,6·10³ µg/m³ i. N. tr.

In diesem Versuchszeitraum (vgl. Fig. 4 bzw. Fig. 5) wurde Brom in Form eines hochbromierten Flüssigabfalls über einen Brenner am Drehrohrofenkopf zugegeben, jedoch wurde die zugegebene Brommenge schrittweise verringert, womit der Bromgehalt im Kesselrauchgas stufenweise von ca. 9·10³ auf ca. 3·10³ mg/m³ i. N. tr. abgesenkt wurde (Kurve 41 in Fig. 4 und linke Ordinate). Der mittels Zudosierung von Schwefelgranulat herbeigeführte Rest-SO₂-Gehalt im Kesselrohgas war mit ca. 4,3·10³ mg/m³ i. N. tr in diesem Versuchszeitraum wiederum sehr hoch gewählt worden. Neben dem hochbromierten Flüssigabfall wurde auch ein chlorierter Flüssigabfall mitverbrannt.

Wie Figur 4 bzw. Figur 5 zu entnehmen ist, war der Gehalt an metallischem Quecksilber im gewaschenen Reingas nach KEGR deutlich kleiner als 2 µg/m³ i. N. tr. (Kurve 42 in Fig. 4 und rechte Ordinate). Nachweislich war im gewaschenen Reingas auch hier praktisch kein Hgᵢₒₙ zu finden (Hgᵢₒₙ = Null, d.h. vollständige Auswaschung des ionischen Quecksilbers und somit Hg_{ges} = Hgₘₑₜ). Entsprechend war der Abscheidegrad von Quecksilber in der Nasswäsche deutlich größer als 99,98 % (Kurve 52 in Fig. 5 und rechte Ordinate), solange der Bromgehalt größer als 3·10³ mg/m³ i. N. tr. (Kurve 41 und linke Ordinate) bzw. das Brom-Quecksilber-Massenverhältnis größer als 500 µg Brom/µg Quecksilber betrug (Kurve 51 in Fig.5 und linke Ordinate). Gegen 13:30 Uhr sinkt der Bromgehalt im Rauchgas auf 3·10³ mg/m³ i. N. tr. bzw. das Brom-Quecksilber-Massenverhältnis auf ca. 335 µg Brom/µg Quecksilber. Dabei steigt die Konzentration von metallischem Quecksilber nach der Nasswäsche auf bis zu 20 µg/m³ i. N. tr. (Kurve 42 in Fig. 4 und linke Ordinate) bzw. nimmt der Hg-Abscheidegrad auf 99,8 % ab (Kurve 52 in Fig. 5 und rechte Ordinate). Darüber hinaus führt eine kurzzeitige Unterbrechung der Chlor-Zugabe kurz nach 14:30 Uhr zu einer Spitzenkonzentration von metallischem Quecksilber nach der Wäsche von ca. 117 µg/m³ i. N. tr. (Kurve 42 in Fig. 4 und linke Ordinate)bzw. zu einem kurzzeitigen Abfall des Abscheidegrades auf ca. 98,4 % (Kurve 51 in Fig. 5 und rechte Ordinate). Hieran wird die gegenüber Brom vergleichsweise geringe Wirkung von Chlor deutlich.

### Beispiel 4

Figur 6 illustriert einen Versuch zum Vergleich der Wirkung von Brom und Chlor auf die Oxidation von Quecksilber im Kesselrauchgas der oben beschriebenen Sondermüllverbrennungsanlage. Dabei lagen ein durch Zudosierung von HgCl₂ eingestellter Hg_{ges}-Gehalt von 130 µg/m³ i. N. tr. bei einem durch Mitverbrennung chlorarmer Lösemittel eingestellten Chlorgehalt (Cl_{ges}) im Kesselrauchgas von 1,35·10³ mg/m³ i. N. tr. sowie einem durch Zudosierung von Schwefelgranulat eingestellten Restgehalt an Schwefeldioxid im Kesselrohgas von 1,5·10³ mg/m³ i. N. tr. vor. Der Messpunkt 63 zeigt den zunächst ohne Bromzusatz, d.h. allein durch Chlor, erzielten Hgₘₑₜ-Speziesanteil von ca. 63 Gew.-% im Kesselrohgas vor der Nasswäsche. Die anlagenspezifische Kurve 61, welche auf ca. 20 Betriebsversuchen an einer Sondermüllverbrennungsanlage mit Verbrennung hochchlorierter Flüssigabfälle basiert, zeigt, wie der Hgₘₑₜ-Speziesanteil (Hgₘₑₜ/Hg_{ges}) mit wachsendem Chlorgehalt Cl_{ges} im Kesselrauchgas zurückgeht.

Ausgehend von einem Hgₘₑₜ-Speziesanteil von ca. 63 Gew.-% im Kesselrohgas vor der Nasswäsche (Messpunkt 63 mit Cl_{ges}-Gehalt als Abszisse bzw. Messpunkt 63' mit Br_{ges}-Gehalt als Abszisse) wurde dann in drei Schritten eine zunehmende Menge einer bromhaltigen Verbindung zudosiert (vgl. Pfeil 64, der den Übergang von der Darstellung des Hgₘₑₜ-Speziesanteil in Abhängigkeit von dem Cl_{ges}-Gehalt zu der Darstellung in Abhängigkeit von dem Br_{ges}-Gehalt markiert). Dabei wurde der Bromgehalt im Kesselrauchgas von zunächst 0 mg/m³ i. N. tr. (Messpunkt 63' mit Brges-Gehalt als Abszisse) durch Zudosierung von wässriger Bromwasserstofflösung bzw. von wässriger Natriumbromidlösung (Eindüsung an der Nachbrennkammerdecke 14, Fig. 1) in drei Schritten auf 50, 100 und 120 mg/m³ i. N. tr. (Messpunkte 62 mit Brgₑₛ-Gehalt als Abszisse) angehoben. Dabei ging der Hgₘₑₜ-Speziesanteil (Hgₘₑₜ/Hg_{ges}) im Kesselrohgas vor der Nasswäsche - ausgehend von ca. 63 Gew.-%-bis auf 30 Gew.-% zurück.

Der Vergleich weist die deutlich effektivere Oxidation des Quecksilbers durch bromhaltige Verbindungen im Vergleich zu chlorhaltigen Verbindungen am Beispiel einer Sondermüllverbrennungsanlage nach. Um allein mittels Chlor einen Hgmet-Speziesanteil von nur 30 Gew.-% zu erreichen, müsste man den Cl_{ges}-Gehalt gemäß der Chlorierungskurve 61 auf 4·10³ mg/m³ i. N. tr. erhöhen. Statt dessen erreicht man dies mit nur 120 mg/m³ i. N. tr. an Brom. Brom erscheint daher etwa 25-fach wirksamer als Chlor. Die Hg-Bromierungskurve 65 (Br_{ges}-Gehalt als Abszisse) entspricht unter Berücksichtigung dieses Faktors der vollständig vermessenen Hg-Chlorierungskurve 61 (Cl_{ges}-Gehalt als Abszisse). Gleiches gilt für im Fall von Kraftwerksrauchgasen, wo allerdings die anlagenspezifische Hg-Chlorierungskurve und die entsprechende Hg-Bromierungskurve 65 zu wesentlich niedrigeren Halogengehalten hin verschoben sind.

### Beispiel 5

Figur 7 und Figur 8 illustrieren Versuche zum Nachweis der Wirkung von Brom auf die Quecksilberabscheidung in einem Kohlekraftwerk der Bayer AG in Uerdingen (vgl. Fig. 9). In dem Kohlekraftwerk erfolgte ein Versuch mit Zudosierung von wässriger HgCl₂-Lösung und von wässriger NaBr-Lösung in den Feuerraum zum Nachweis der Wirkung von Brom auf die Hg-Oxidation. Das Kraftwerk umfasst zwei parallele Schmelzkammerkessel 91, 91' mit Temperaturen im Feuerraum um 1450°C. Die Schmelzkammerkesssel 91, 91' werden mit Kohle 92, 92' bestückt. Über die jeweiligen Luftvorwärmer 93, 93' wird den Schmelzkammerkesseln 91, 91' Frischluft 94, 94' zugeführt. Das Kesselrohgas 95, 95' wird über elektrostatische Gasreiniger (EGR) 96, 96' dem gemeinsamen schwachsauren (pH = 5,3) Nasswäscher als Rauchgasentschwefelungsanlage (REA-Wäscher) 97 zugeführt. Das gewaschene Kesselrauchgas (Reingas) wird anschließend in zwei parallele katalytisch wirkende Entstickungsanlagen (SCR-Entstickungsanlage) 98, 98' überführt, bevor es über Kamine 100, 100' emittiert wird. Der in den EGR abgeschiedene Flugstaub 99, 99' wird zu 100 % in die Feuerung des jeweiligen Schmelzkammerkessels zurückgeführt. An der Messstelle 101 nach der EGR 96 wurden die Gehalte an Hgₘₑₜ und Hg_{ges} im entstaubten Kesselrohgas kontinuierlich erfasst.

Es wurde kein Schwefel zudosiert. Der Gehalt an Schwefeldioxid im Kesselrauchgas von 1,3·10³ i. N. tr. resultierte ausschließlich aus dem verbrannten Kohleschwefel selbst. Der Gesamtquecksilbergehalt im entstaubten Rohgas nach der EGR, d.h. vor der Nasswäsche, betrug zu Beginn bei reiner Kohleverbrennung (polnische Steinkohle) im Mittel nur 22,5 µg/m³ i. N. tr., vgl. Fig. 7, Kurve 71 (Gesamtgehalt an Quecksilber Hg_{ges}) um 8:30 Uhr, der Gehalt an metallischem Quecksilber im Mittel nur 8,8 µg/m³ i. N. tr., vgl. Fig. 7, Kurve 72 (Gehalt an metallischem Quecksilber Hgₘₑₜ) um 8:30 Uhr. Die Zahnung beider Kurven 71, 72 im 10-Minuten-Takt beruht auf der regelmäßigen Abklopfung der EGR; wodurch unmittelbar nach Abreinigung der Staubschichten im entstaubten Kesselrohgas hinter der EGR höhere Gehalte auftreten. Um 9:15 Uhr wurde mit der Zudosierung von Quecksilber (als wässrige HgCl₂-Löung) und um 10:30 dann auch mit der Zudosierung von Brom (als wässrige NaBr-Lösung) in den Feuerraum begonnen. Die Kurve 73 (Figur 7, rechte Ordinate) stellt die durch Zudosierung von Quecksilber herbeigeführte Erhöhung des Hg_{ges}-Gehalts im Kesselrauchgas dar. Zwischen ca. 9:30 und 13:00 Uhr betrug die mittels HgCl₂-Zudosierung herbeigeführte Anhebung des Gesamtgehalts an Quecksilber im Rauchgas vor der EGR mindestens ca. 220 µg/m³ i. N. tr. (Kurve 73, rechte Ordinate). Die Kurve 81 in Fig. 8 stellt die durch Zudosierung von wässriger NaBr-Lösung herbeigeführte Erhöhung des Br-Gehalts im Kesselrauchgas dar. Um 10:30 Uhr wurde der Bromgehalt im Rauchgas vor der EGR zunächst um mindestens 75 mg/m³ i. N. tr. angehoben und schrittweise wieder abgesenkt. Um 16:10 Uhr erfolgte eine neuerliche Anhebung des Bromgehalts um ca. 43 mg/m³ i. N. tr. Wegen der Rückführung der Flugasche in die Schmelzkammerfeuerung und somit auch der Rückführung von an der Flugasche sorbiertem Quecksilber bzw. Brom handelt es sich hierbei um Mindestanhebungen, wie sie sich aus den zudosierten Mengenströmen und dem Rauchgasvolumenstrom (ca. 110·10³ m³ i. N. tr./h) ergeben. Die tatsächlichen Hg- und Br-Gehalte im Rohgas vor der EGR liegen demzufolge (Kreislauf zwischen Schmelzkammerfeuerung und EGR) etwas höher.

Die Kurven 71 bzw. 72 (linke Ordinate) in Figur 7 zeigen, wie mit dem Zusatz der bromhaltigen Verbindung der Gehalt an Quecksilber im Rauchgas deutlich zurückgeht. Dies gilt einerseits für das ionische Quecksilber (Differenz zwischen Hg_{ges} und Hgₘₑₜ), welches in Anwesenheit der bromhaltigen Verbindung vermehrt gebildet und offensichtlich am rückgeführten Flugstaub adsorbiert wird, und gilt andererseits aber stärker noch für das metallische Quecksilber, dessen Gehalt im entstaubten Rohgas nach EGR trotz des Zusatzes von Quecksilber annähernd auf den Ausgangsgehalt vor der Quecksilberzugabe zurückkehrt. Von 10:30 Uhr bis 13:00 Uhr (Ende der Br-Zudosierung) und weit darüber hinaus betrug der Gehalt an Hgₘₑₜ weniger als 10 µg/m³ i. N. tr. Erst mit dem Ende der neuerlichen Zugabe der Natriumbromidlösung gegen 19:00 Uhr steigt der Gehalt von Hg_{ges} deutlich an. Weiterhin zeigt die Kurve 82 in Figur 8 den zunächst schlagartigen Rückgang des Speziesanteils an metallischem Quecksilber mit der Zugabe von Brom (Absenkung von ca. 40 Gew.-% auf ca. 10 Gew.-% gegen 10:30 Uhr). Entsprechendes zeigt sich nach ca. 17:00 Uhr bei der neuerlichen Quecksilber- und Bromzugabe an dem allmählichen Rückgang des Hgₘₑₜ-Speziesanteils bis auf nur ca. 5 Gew.-% gegen 20:45 Uhr. Infolge der Hg-Zudosierung und der verstärkten Hg-Adsorption stieg der Hg-Gehalt im zur Schmelzkammer rückgeführten EGR-Flugstaub von anfänglich ca. 2-5 mg/kg im Laufe des Versuchs auf 55 mg/kg an.

## Patentansprüche

1. Verfahren zur Abscheidung von Quecksilber aus Rauchgasen von Hochtemperaturanlagen, insbesondere von Kraftwerken und Abfallverbrennungsanlagen, **dadurch gekennzeichnet, dass**
- der, gegebenenfalls mehrstufigen, Feuerung und/oder dem Rauchgas in einem der Feuerung nachgeschalteten Anlagenteil Brom und/oder eine bromhaltige Verbindung und/oder eine Mischung verschiedener bromhaltiger Verbindungen zugeführt wird, wobei die Temperatur beim Kontakt der bromhaltigen Verbindung mit dem Rauchgas mindestens 500°C, vorzugsweise mindestens 800°C, beträgt,
- die Verbrennung in Gegenwart einer schwefelhaltigen Verbindung, insbesondere Schwefeldioxid, gegebenenfalls unter Zusatz von Schwefel und/oder einer schwefelhaltigen Verbindung und/oder einer Mischung verschiedener schwefelhaltiger Verbindungen erfolgt
- und anschließend das Rauchgas einer, gegebenenfalls mehrstufigen, Reinigung zur Abtrennung von Quecksilber aus dem Rauchgas unterzogen wird, welche eine Nasswäsche und/oder eine Trockenreinigung umfasst.

2. Verfahren nach Anspruch 1, **dadurch gekennzeichnet, dass** die bromhaltige Verbindung eine wässrige Lösung von Bromwasserstoff und/oder ein Alkalibromid, insbesondere Natriumbromid, und/oder eine wässrige Lösung von Alkalibromid ist.

3. Verfahren nach einem der Ansprüche 1 bis 2, **dadurch gekennzeichnet, dass** die bromhaltige Verbindung und/oder die Mischung bromhaltiger Verbindungen flüssige und/oder feste bromreiche Abfallstoffe sind.

4. Verfahren nach einem der Ansprüche 1 bis 3, **dadurch gekennzeichnet, dass** das Brom und/oder die bromhaltige Verbindung und/oder die Mischung bromhaltiger Verbindungen der Verbrennungsluft und/oder gegebenenfalls einem rückgeführten Teilstrom, insbesondere dem rückgeführtem Rauchgas und den rückgeführten Flugstäuben, zugesetzt wird.

5. Verfahren nach einem der Ansprüche 1 bis 4, **dadurch gekennzeichnet, dass** das Massenverhältnis von Brom zu Quecksilber im Bereich von 10² bis 10⁴ liegt.

6. Verfahren nach einem der Ansprüche 1 bis 5, **dadurch gekennzeichnet, dass** die Verbrennung zusätzlich in Gegenwart von Chlor und/oder einer chlorhaltigen Verbindung und/oder einer Mischung verschiedener chlorhaltiger Verbindungen und/oder Jod und/oder einer jodhaltigen Verbindung und/oder einer Mischung verschiedener jodhaltiger Verbindungen durchgeführt wird.

7. Verfahren nach einem der Ansprüche 1 bis 6, **dadurch gekennzeichnet, dass** die Rauchgasreinigung eine mehrstufige nasse Rauchgaswäsche mit mindestens einer stark sauren und/oder mindestens einer schwach sauren und/oder alkalischen Waschstufe umfasst.

8. Verfahren nach einem der Ansprüche 1 bis 7, **dadurch gekennzeichnet, dass** die Rauchgasreinigung mindestens eine trockene oder quasitrockene, auf Adsorption basierende Reinigungsstufe umfasst, insbesondere unter Verwendung von elektrostatischen oder filternden Staubabscheidern.

9. Verfahren nach Anspruch 8, **dadurch gekennzeichnet, dass** die mit Quecksilber beladenen Flugstäube aus gegebenenfalls vorhandenen Staubabscheidern zwecks Quecksilberentfrachtung thermisch nachbehandelt wird, insbesondere in einer auf Temperaturen von mindestens 200°C beheizten Drehtrommel.

10. Verfahren nach einem der Ansprüche 1 bis 9, **dadurch gekennzeichnet, dass** der Quecksilbergehalt des Rauchgases, insbesondere der Gehalt an metallischem Quecksilber, nach der Rauchgasreinigung kontinuierlich gemessen wird und anhand des gemessenen Quecksilbergehalts die Menge an zugeführtem Brom und/oder bromhaltigen Verbindungen sowie gegebenenfalls Schwefel und/oder schwefelhaltigen Verbindungen geregelt wird.

## Claims

1. Process for removing mercury from flue gases of high-temperature plants, in particular from power stations and waste incineration plants,
**characterized in that**
- bromine and/or a bromine compound and/or a mixture of various bromine compounds is fed to the if appropriate multistage furnace and/or to the flue gas in a plant section downstream of the furnace, the temperature during the contact of the bromine compound with the flue gas being at least 500°C, preferably at least 800°C,
- the combustion taking place in the presence of a sulphur compound, in particular sulphur dioxide, with or without the addition of sulphur and/or a sulphur compound and/or of a mixture of various sulphur compounds,
- and then the flue gas being subjected to an if appropriate multistage cleanup for removing mercury from the flue gas, which cleanup comprises a wet scrubber and/or a dry cleanup.

2. Process according to Claim 1, **characterized in that** the bromine compound is an aqueous solution of hydrogen bromide and/or an alkali metal bromide, in particular sodium bromide, and/or an aqueous solution of alkali metal bromide.

3. Process according to one of Claims 1 to 2, **characterized in that** the bromine compound and/or the mixture of bromine compounds are liquid and/or solid high-bromine wastes.

4. Process according to one of Claims 1 to 3, **characterized in that** the bromine and/or the bromine compound and/or the mixture of bromine compounds is added to the combustion air and/or if appropriate a recycled substream, in particular the recycled flue gas and the recycled fly ash.

5. Process according to one of Claims 1 to 4, **characterized in that** the mass ratio of bromine to mercury is in the range from 10² to 10⁴.

6. Process according to one of Claims 1 to 5, **characterized in that** the combustion is carried out additionally in the presence of chlorine and/or a chlorine compound and/or a mixture of various chlorine compounds and/or iodine and/or an iodine compound and/or a mixture of various iodine compounds.

7. Process according to one of Claims 1 to 6, **characterized in that** the flue gas emission control system comprises a multistage wet flue gas scrubber having at least one strongly acidic scrubbing stage and/or at least one weakly acidic and/or akaline scrubbing stage.

8. Process according to one of Claims 1 to 7, **characterized in that** the flue gas emission control system comprises at least one dry or semi-dry absorption-based emission control stage, in particular using electrostatic or filtering dust separators.

9. Process according to Claim 8, **characterized in that** the fly ash loaded with mercury from any dust separators present is given a thermal secondary treatment to decrease mercury load, in particular in a rotary drum heated to temperatures of at least 200°C.

10. Process according to one of Claims 1 to 9, **characterized in that** the mercury content of the flue gas, in particular the content of metallic mercury, is measured continuously downstream of the flue gas emission control system and on the basis of the measured mercury content the amount of bromine fed and/or bromine compounds fed and any sulphur and/or sulphur compounds fed is controlled.

## Revendications

1. Procédé d'extraction de mercure des gaz de fumée d'installations à haute température, notamment de centrales électriques et d'installations d'incinération d'ordures, **caractérisé par le fait que**
- on envoie du brome et/ou un composé contenant du brome et/ou un mélange de différents composés contenant du brome au foyer, éventuellement à plusieurs étapes, et/ou au gaz de fumée dans une partie d'installation placée en aval du foyer, la température lors du contact du composé contenant du brome avec le gaz de fumée étant au moins égale à 500°C, de préférence au moins 800°C,
- la combustion s'effectue en présence d'un composé contenant du soufre, notamment du dioxyde de soufre, éventuellement avec ajout de soufre et/ou d'un composé contenant du soufre et/ou d'un mélange de différents composés contenant du soufre
- et on soumet ensuite le gaz de fumée à une épuration, éventuellement en plusieurs étapes, qui est destinée à séparer le mercure du gaz de fumée et qui comprend un lavage par voie humide et/ou une épuration par voie sèche.

2. Procédé selon la revendication 1, **caractérisé par le fait que** le composé contenant du brome est une solution aqueuse de bromure d'hydrogène et/ou un bromure alcalin, notamment du bromure de sodium, et/ou une solution aqueuse de bromure alcalin.

3. Procédé selon l'une des revendications 1 à 2, **caractérisé par le fait que** le composé contenant du brome et/ou le mélange de composés contenant du brome sont des déchets riches en brome, liquides et/ou solides.

4. Procédé selon l'une des revendications 1 à 3, **caractérisé par le fait que** le brome et/ou le composé contenant du brome et/ou le mélange de composés contenant du brome sont ajoutés à l'air de combustion et/ou éventuellement à un flux partiel recyclé, notamment au gaz de fumée recyclé et aux cendres volantes recyclées.

5. Procédé selon l'une des revendications 1 à 4, **caractérisé par le fait que** le rapport massique du brome au mercure est compris entre 10² et 10⁴.

6. Procédé selon l'une des revendications 1 à 5, **caractérisé par le fait que** la combustion s'effectue en plus en présence de chlore et/ou d'un composé contenant du chlore et/ou d'un mélange de différents composés contenant du chlore et/ou d'iode et/ou d'un composé contenant de l'iode et/ou d'un mélange de différents composés contenant de l'iode.

7. Procédé selon l'une des revendications 1 à 6, **caractérisé par le fait que** l'épuration de gaz de fumée comprend un lavage de gaz de fumée par voie humide en plusieurs étapes avec au moins une étape de lavage fortement acide et/ou au moins une étape de lavage faiblement acide et/ou alcaline.

8. Procédé selon l'une des revendications 1 à 7, **caractérisé par le fait que** l'épuration de gaz de fumée comprend au moins une étape d'épuration sèche ou quasi-sèche, basée sur l'adsorption, notamment avec utilisation de séparateurs de poussière électrostatiques ou filtrants.

9. Procédé selon la revendication 8, **caractérisé par le fait que** les cendres volantes chargées de mercure provenant de séparateurs de poussière éventuellement présents sont ensuite traitées thermiquement pour être déchargées du mercure, notamment dans un tambour rotatif chauffé à des températures d'au moins 200°C.

10. Procédé selon l'une des revendications 1 à 9, **caractérisé par le fait que** l'on mesure en continu la teneur en mercure du gaz de fumée, notamment la teneur en mercure métallique, après l'épuration de gaz de fumée, et que l'on règle la quantité envoyée de brome et/ou de composés contenant du brome ainsi que le cas échéant de soufre et/ou de composés contenant du soufre à l'aide de la teneur en mercure mesurée.
